# EUROPEAN PATENT SPECIFICATION

(11) **EP 2 454 488 B1**
(45) Date of publication and mention of the grant of the patent: **30.05.2018**
(21) Application number: 10800114.0
(22) Date of filing: 12.07.2010
(51) Int. Cl.: F03G 7/06, F03G 7/05, F04F 13/00, F15B 3/00

(54) **HYDRAULIC PRESSURE TRANSDUCER AND HYDRAULIC SYSTEM**
HYDRAULIKDRUCKWANDLER UND HYDRAULIKSYSTEM
TRANSDUCTEUR DE PRESSION HYDRAULIQUE, ET SYSTÈME HYDRAULIQUE

(30) Priority: 14.07.2009 SE 0950555; 14.07.2009 SE 0950556; 14.07.2009 SE 0950557; 14.07.2009 SE 0950558; 14.07.2009 US 225220 P; 14.07.2009 US 225222 P; 14.07.2009 US 225223 P; 14.07.2009 US 225224 P
(43) Date of publication of application: 23.05.2012
(73) Proprietor: Exencotech Ab, 19251 Sollentuna (SE)
(72) Inventor: ÖSTLUND, Bengt, S-192 51 Sollentuna (SE); SVENSSON, Assar, S-192 55 Sollentuna (SE); INGVAST, Håkan, S-894 31 Själevad (SE)
(74) Representative: Groth & Co. KB
(86) International application number: PCT/SE2010/050810
(87) International publication number: WO 2011/008158

(56) References cited:
- WO-A1-2009/072894
- JP-A- 2008 039 024
- US-A- 3 431 747
- US-A- 4 079 596
- US-A- 4 973 408
- US-A- 5 117 908
- US-A1- 2006 037 895
- US-A1- 2006 037 895
- US-A1- 2008 190 848
- US-A1- 2008 245 068
- US-A1- 2009 013 691
- US-B1- 6 497 558

## Description

The present invention relates to a device for transforming a pressure of a fluid from one pressure level to another, comprising at least one pair of hydraulic rotating machines that are mutually mechanically interconnected in such a way that a first machine in a first pair of said at least one pair can run a second machine in the same first pair. The present invention also relates to a hydraulic system.

### Background of the invention

US, B1, 6 497 558 shows a hydraulic pressure transformer for the conversion of an input hydraulic power to an output hydraulic power. The transformer has a cam block with a cam opening defining a pump section and a motor section. A rotor is disposed within the cam opening. The rotor and/or cam block are movable relative to each other in at least one direction. Service life problems as well as sealing problems may occur in this construction.

### Summary of the invention

A first object of the present invention is to provide a hydraulic pressure transducer that has a long service life. A second object of the present invention is to provide a hydraulic pressure transducer that has few or no sealing problems and with a longer technical lifetime. A third object of the present invention is to provide a hydraulic system for transferring hydraulic energy and including an effective hydraulic pressure transducer. Thus, the invention comprises a pressure transducer for transforming a pressure of a fluid from one pressure level to another, comprising at least one pair of hydraulic rotating machines that are mutually mechanically interconnected in such a way that a first machine in a first pair of said at least one pair can run a second machine in the same first pair. Said first pair of machines is mounted in a first substantially closed room and each one of said first and second machines is in hydraulic connection with said first room.

Each one of said first and second machines may be provided with at least one hydraulic inlet and at least one hydraulic outlet. Each one of said first and second machines may be in hydraulic connection with said first room via either at least one of said at least one hydraulic inlet or at least one of said at least one hydraulic outlet. Each one of said first and second machines may be in hydraulic connection with said first room via at least one of said at least one hydraulic inlet when the pressure transducer is used for increasing a pressure of a fluid whereas each one of said first and second machines may be in hydraulic connection with said first room via at least one of said at least one hydraulic outlet when the pressure transducer is used for decreasing said pressure of said fluid.

Said first room may be in hydraulic connection with a fluid source of a second pressure level. A first one of said first and second machines may be in hydraulic connection with a fluid source of a third pressure level. A second one of said first and second machines may be in hydraulic connection with a fluid source of a first pressure level.

Said mutually mechanically interconnected machines may be interconnected via at least one shaft coupling. At least one of said first and second machines may have at least one housing that is in hydraulic connection with said first room, a fluid pressure in said housing being substantially the same as a fluid pressure in said first room for minimum wear of said at least one of said first and second machines in operation.

The pressure transducer may comprise two pairs of hydraulic rotating machines that are mutually mechanically interconnected in such a way that said first machine in said first pair of said two pairs can run said second machine in said same first pair whereas a first machine in a second pair of said two pairs can run a second machine in the same second pair and where said first pair is mounted in said first substantially closed room whereas said second pair is mounted in a second substantially closed room.

Each one of said first and second machines of said first and second pairs may be provided with at least one hydraulic inlet and at least one hydraulic outlet. Said first machine in said first pair may be hydraulically connected to said second room. Said second machine in said second pair may be hydraulically connected to said first room. Each one of said first and second machines of said first pair may be in hydraulic connection with said first room whereas each one of said first and second machines of said second pair may be in hydraulic connection with said second room. A first one of said first and second machines in said second pair may be in hydraulic connection with a fluid source of a forth pressure level when said second room is at a third pressure level.

Said mutually mechanically interconnected machines in each one of said first and second pairs respectively may be interconnected via at least one shaft coupling. At least one of said first and second machines of said first pair may have at least one first housing that is in hydraulic connection with said first room, a fluid pressure in said first housing being the same as a fluid pressure in said first room whereas at least one of said first and second machines of said second pair may have at least one second housing that is in hydraulic connection with said second room, a fluid pressure in said second housing being the same as a fluid pressure in said second room for minimum wear of said hydraulic rotating machines in operation.

The pressure transducer may comprise at least three pairs of hydraulic rotating machines that are mutually mechanically interconnected in such a way that a first machine in each pair of said at least three pairs can run a second machine in the same pair respectively and where each pair is mounted in a corresponding substantially closed room of its own.

Each one of said first and second machines of each pair of said at least three pairs may be provided with at least one hydraulic inlet and at least one hydraulic outlet. There may be a hydraulic connection between a first machine in each pair on one hand and said corresponding room of a next pair respectively on the other hand, provided a next pair exists and in such a way that said first machine in said first pair is hydraulically connected to a second room and a first machine in a second pair is hydraulically connected to a third room and so on in an analogous way. There may be a hydraulic connection between a second machine in each pair on one hand and said corresponding room of a previous pair respectively on the other hand in such a way that a second machine in a second pair is hydraulically connected to said first room and a second machine in a third pair is hydraulically connected to a second room and so on in an analogous way.

Each one of said first and second machines of each pair may be in hydraulic connection with said corresponding room respectively in such a way that each one of said first and second machines of said first pair is in hydraulic connection with said first room whereas each one of first and second machines of a second pair is in hydraulic connection with a second room and each one of first and second machines of a third pair is in hydraulic connection with a third room and so on in an analogous way. A first one of first and second machines in a third pair may be in hydraulic connection with a fluid source of a fifth pressure level when said corresponding room is at a forth pressure level.

Said mutually mechanically interconnected machines in each pair of said at least three pairs respectively may be interconnected via at least one shaft coupling. At least one of said first and second machines of each pair of said at least three pairs respectively may have at least one housing that is in hydraulic connection with said corresponding room, a fluid pressure in said housing being the same as a fluid pressure in said corresponding room for minimum wear of said hydraulic rotating machines in operation.

The invention also comprises a hydraulic system for transferring hydraulic energy and including a pressure transducer according to any one of the claims.

The present invention relates to a hydraulic system comprising at least one hydraulic motor for the working of at least one electric generator for generating electric energy, the system comprising at least one hydraulic pressure producer in hydraulic connection with said at least one hydraulic motor for transferring hydraulic energy to said at least one hydraulic motor. The present invention also relates to an energy production plant and use of a hydraulic system.

### Background of the invention

A hydraulic system of the kind mentioned above is known by US, A1, 2007/0024058 which shows methods and apparatus for advanced wind turbine design. A blade assembly 102 turns a hydraulic pump 128 which pressurizes fluid and stores the fluid in a chamber 146. Fluid is directed via a valve 158 to a hydraulic motor 162 which is coupled to an electric generator 166. The delivery of fluid to the hydraulic motor 162 is, however, not at optimum leading to the fact that the generator 166 is not driven at optimum.

### Summary of the invention

A first object of the present invention is to provide a hydraulic system that is effective in its ability to deliver fluid to a hydraulic motor in the system. A second object of the present invention is to provide a hydraulic system that is effective in its ability to drive an electric generator. A third object of the present invention is to provide an energy production plant for effectively generating electric energy. A forth object of the present invention is to provide a use of an effective hydraulic system. Thus, the invention comprises a hydraulic system comprising at least one hydraulic motor for the working of at least one electric generator for generating electric energy, the system comprising at least one hydraulic pressure producer in hydraulic connection with said at least one hydraulic motor for transferring hydraulic energy to said at least one hydraulic motor. The hydraulic system has at least one further device for transferring hydraulic energy to said at least one hydraulic motor.

Said at least one further device may be at least one flow accumulator for accumulating fluid when a flow from said at least one hydraulic pressure producer is larger than an intended flow to said at least one hydraulic motor and for delivering fluid when said flow from said at least one hydraulic pressure producer is smaller than said intended flow to said at least one hydraulic motor. Said at least one further device may be at least one further hydraulic pressure producer in hydraulic connection with said at least one hydraulic motor for transferring hydraulic energy to said at least one hydraulic motor. Said at least one further device may be
- at least one flow accumulator for accumulating fluid when a flow from said at least one hydraulic pressure producer is larger than an intended flow to said at least one hydraulic motor and for delivering fluid when said flow from said at least one hydraulic pressure producer is smaller than said intended flow to said at least one hydraulic motor as well as
- at least one further hydraulic pressure producer in hydraulic connection with said at least one hydraulic motor for transferring hydraulic energy to said at least one hydraulic motor.

At least one pair of said hydraulic pressure producers may comprise a first hydraulic pressure producer and a second hydraulic pressure producer mutually hydraulicly connected in parallell. Said first and second hydraulic pressure producers may be arranged for working in cycles so that said first hydraulic pressure producer delivers an outflow at the same time as said second hydraulic pressure producer has an inflow whereas said first hydraulic pressure producer has an inflow at the same time as said second hydraulic pressure producer delivers an outflow. Said first and second hydraulic pressure producers may be arranged to work with a mutual phase difference of approx 180 degrees.

At least one of said at least one hydraulic pressure producer may be in hydraulic connection with said at least one hydraulic motor in a closed cycle. At least one of said at least one hydraulic pressure producer and/or at least one of said at least one further hydraulic pressure producer may be in hydraulic connection with said at least one hydraulic motor in a closed cycle.

At least one of said at least one hydraulic motor may have a variable displacement. Said displacement may be variable in accordance with variations in a pressure of a fluid which fluid is transferring hydraulic energy to said at least one of the at least one hydraulic motor. The displacement may be arranged to increase when the pressure increases whereas the displacement is arranged to decrease when the pressure decreases.

The displacement may be variable in accordance with variations in a flow of a fluid which fluid is transferring hydraulic energy to said at least one of the at least one hydraulic motor. The displacement may be arranged to increase when the flow increases whereas the displacement is arranged to decrease when the flow decreases.

At least one control system for control of at least one of said at least one hydraulic motor. Said at least one control system is arranged to control a displacement of said at least one of said at least one hydraulic motor.

The hydraulic system may comprise at least one pressure transducer for transforming a hydraulic pressure in said hydraulic system. At least one of said at least one pressure transducer may be hydraulicly connected between said at least one hydraulic pressure producer on one hand and said at least one hydraulic motor on the other hand. Said at least one pressure transducer may be arranged to lower said hydraulic pressure in said hydraulic system from a higher pressure in a fluid from said at least one hydraulic pressure producer to a lower pressure in said fluid to said at least one hydraulic motor.

At least one of said at least one hydraulic pressure producer may be a pump. At least one of said at least one hydraulic pressure producer and/or at least one of said at least one further hydraulic pressure producer may be a pump. Said pump may be linear with pressure strokes for fluid delivery and return strokes for fluid intake.

At least one of said at least one hydraulic pressure producer may have at least one path for fluid flow, said path comprising at least one mechanical part that is resilient for extra powerful conversion of an internal energy of a fluid within said path into electric energy. At least one of said at least one hydraulic pressure producer and/or at least one of said at least one further hydraulic pressure producer may have at least one path for fluid flow, said path comprising at least one mechanical part that is resilient for extra powerful conversion of an internal energy of a fluid within said path into electric energy. Said at least one mechanical part may be at least one membrane. Said at least one mechanical part may be at least one volume of at least one phase change material (PCM). Said at least one mechanical part may be at least one membrane together with at least one volume of at least one phase change material (PCM). Said membrane may be situated between said phase change material (PCM) and said fluid.

At least one of said at least one hydraulic pressure producer may comprise at least one volume of at least one phase change material (PCM). At least one of said at least one hydraulic pressure producer and/or at least one of said at least one further hydraulic pressure producer may comprise at least one volume of at least one phase change material (PCM).

At least one check valve may be hydraulicly connected before and/or after at least one of said at least one hydraulic pressure producer in the hydraulic system. At least one check valve may be hydraulicly connected before and/or after at least one of said at least one hydraulic pressure producer and/or before and/or after at least one of said at least one further hydraulic pressure producer in the hydraulic system.

At least one valve may be hydraulicly connected between said at least one flow accumulator and the rest of the hydraulic system.

At least one of said at least one electric generator may be of an asynchronous type. At least one of said at least one electric generator may be of a synchronous type.

The invention also comprises an energy production plant for generating electric energy and including a hydraulic system according to any one of the claims.

The invention also comprises use of a hydraulic system according to any one of the claims for the working of at least one electric generator for generating electric energy. A rotational speed of a rotational axis of at least one of said at least one electric generator may be held substantially constant.

### Field of the invention

The present invention relates to a power station system operable to generate energy.

### Background of the invention

The possibility to generate mechanical or electrical energy from low grade heat is limited. Existing systems based on techniques such as Organic Rankine Cycles, Kalina Cycles and Sterling Cycles suffers from very low overall efficiency when the temperature on the input heat decreases below 60°C. There are no existing technologies that could combine an acceptable efficiency at a competitive cost. It is pointed out that the efficiency is defined as the ratio between output electrical or mechanical energy (Wₑ) and heat input energy (Q).

The patent document US 2009/0013691 At relates to an energy producing device disclosed in fig. 4 and 5, comprising a PCM heat machine 200, a hydraulic system with a hydraulic fluid 210 and a hydraulic motor 250 used for conversion of hydraulic energy to electrical energy. The hydraulic fluid is adapted to be controlled within the energy producing device in accordance with the density changes of the PCM (see paragraph [0012]). The document discusses mass and cost reductions which can be achieved by use of the device ([0023]).

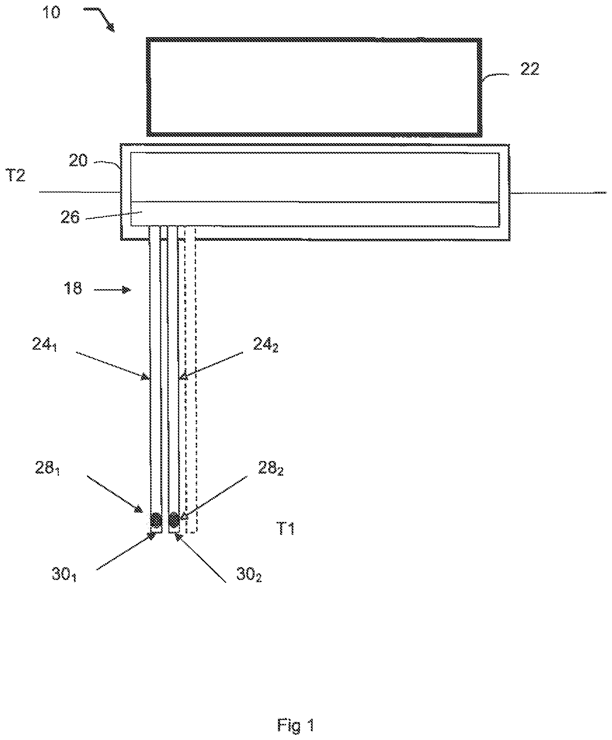

The patent document US 2008/0061560 A1 relates to a system for generating electrical power signals including at least one heat engine 12 with a piezoelectric transducer element 28, which engine 12 may comprise one or more PCM 26. Mechanical stress on the piezoelectric transducer element 28 causes generation of a sequence of high voltage, low current electrical pulses (see fig. 1A-B, [0044] and [0054]). The system comprises a pressure control mechanism 40.

The patent document US 2008/0245068 A1 relates to an apparatus for harvesting energy and generating power. The apparatus comprises a phase-change media segregated and contained within an expandable capsule wherein the phase-change media expands upon cooling to create pressure, a carrier liquid that does not change phase in an operating temperature range, a heat exchanger, a separator, a pressurizer, and an engine.

### Summary of the invention

The above mentioned problems are solved by a power station system operable to generate energy according to Claim 65. The power station system comprises a heat engine system, and a hydraulic system connected to the heat engine system. Furthermore, the heat engine system comprises n number of energy cells, wherein n is an integer, and n ≥ 1, and a heat source connected to the energy cells, and a cooler means connected to the energy cells. Each energy cell is operable to generate a pressurized fluid when a phase change material (PCM), comprised in each energy cell, changes from solid phase to liquid phase. The energy cells are operable between a first phase, and a second phase, wherein, during the first phase, n/2 of the energy cells produces pressurized fluid, and the rest of the energy cells are cooling down, and vice versa during the second phase. The hydraulic system comprises a pressure transducer, and a hydraulic motor connected to the pressure transducer, and operable to generate a constant rotation speed.

A main advantage with this system is that it is possible to use a heat source with a temperature below 60°C.

A further advantage with this system is that it is possible to use a temperature difference between the heat source and the cooler means as low as 20°C with an acceptable efficiency and cost.

A further advantage in this context is achieved if the power station system also comprises an electrical generator means connected to the hydraulic motor and operable to generate electricity with a specific frequency and amplitude, and a control system operable to control the process performance based on real time measurements of time, flow, temperature, pressure and power. Hereby it is possible to generate electricity with the same advantage as given above. Furthermore, it is also possible to optimize the process performance.

Furthermore, it is an advantage in this context if the energy cells are connected in a sequence, and if the heat source is connected to the first energy cell, and if the cooler means is connected to the last energy cell, and if, during the first phase, every two energy cells produces pressurized fluid, and every two energy cells are cooling down, and vice versa during the second phase. Hereby it is possible to reuse the heat from one step and use it in the next. The overall efficiency is thereby increased.

According to another embodiment it is an advantage if n is an even integer, and if the first n/2 number of energy cells are connected, and work in parallel, and if the second n/2 number of energy cells are connected, and work in parallel.

A further advantage in this context is achieved if the pressure transducer is operable to reduce the pressure in the pressurized fluid from the energy cells.

Furthermore, it is an advantage in this context if the hydraulic motor is operable to generate the constant rotation speed during variable torque, and variable displacement. Hereby the electrical generator means can be simplified.

A further advantage in this context is achieved if the control system also is operable to monitor operational conditions, safety, and service intervals of the power station system. Hereby it is possible to increase the technical lifetime of the power station system.

Furthermore, it is an advantage in this context if the temperature difference, T_{d}, between the heat source and the cooler means is at least 20°C.

It will be noted that the term "comprises/comprising" as used in this description is intended to denote the presence of a given characteristic, step or component, without excluding the presence of one or more other characteristic, features, integers, steps, components or groups thereof.

Embodiments of the invention will now be described with reference to the accompanying drawings, in which:

### Field of the invention

The present invention relates to a maritime power plant system operable to generate energy.

### Background of the invention

The possibility to generate mechanical or electrical energy from low grade heat is limited. Existing systems based on techniques such as Organic Rankine Cycles, Kalina Cycles and Sterling Cycles suffers from very low overall efficiency when the temperature on the input heat decreases below 60°C. There are no existing technologies that could combine an acceptable efficiency at a competitive cost. It is pointed out that the efficiency is defined as the ratio between output electrical or mechanical energy (Wₑ) and heat input energy (Q).

The biggest energy resource in the world is the oceans which cover 70% of the surface of the earth. The oceans accumulate energy from the sun to create heat, wind, waves, underwater currents, etc.

Different attempts have been made to design heat machines that are driven by the heat difference between warm surface water and colder water at higher depths. These attempts have failed due to very poor performance.

The patent document US 4,235,075 relates to a method and apparatus for converting relatively low temperature heat energy into useful work. A heated zone having a temperature range including a first predetermined temperature and a cooled zone having a second temperature range including a second predetermined temperature are provided. A meltable wax material is alternatively placed in heat exchange relationship with said heated and cooled zones for producing cyclic melting and resolidification of the wax material. The resultant relatively large cyclic expansion of the wax material within a relatively non-compressible liquid confined in a rigid container produces cycles of relatively high pressure which are then used to perform useful mechanical work.

The patent document US 2006/0137349 A1 relates to a geothermal power plant system for producing electricity and process heat. The geothermal power plant comprises at least one compressed gas storage device, at least one gas compression device connected to the at least one compressed gas storage device, and at least one gas utilization device connected to the at least one compressed gas storage device.

The patent document US 4, 350, 014 relates to a platform for utilisation of the thermal energy of the sea, comprising a floating structure carrying a downwardly extending tube for taking up cold water and supporting at least two power modules each comprising an evaporator and a condenser and pumps for circulation of hot and cold water, each power module being connected to a turbine-driven generator set. The platform is characterized in that the support structure has open cells receiving the power modules and that each module has its component parts arranged in a vertical array so as to constitute a cylindrical assembly extending through the support structure. Preferred applications: offshore manufacture of aluminium, ammonia and hydrogen.

The patent document US 6, 100, 600 relates to a maritime power plant system with a floating or an anchored support structure with a plurality of energy convertors for regenerative energy forms. Energy producing devices for producing a continuous supply of energy by at least two different methods from regenerative energy sources are provided, wherein the regenerative energy sources are ocean water, ocean waves, wind and solar radiation. Further included is at least one industrial production facility and a submarine reverse osmosis device. In order to increase the concentration of energy production, support structures with their different processing facilities and energy producing devices are combined in group and are connected to a common supply net. A process control unit that controls the entire grouping of processing devices and energy producing devices provides for an optimized operation of all components of the maritime power plant system.

The patent document US 4,079,596 discloses a heat engine for converting heat energy into work energy, wherein said heat engine comprises a number of energy cells, wherein each energy cell is operable to generate pressurized fluid when a phase change material (PCM) changes from solid phase to liquid phase.

### Summary of the invention

The above mentioned problems are solved by a maritime power plant system operable to generate energy according to Claim 73. The maritime power plant system comprises a water supply system, a floating platform means, and a power station means. The water supply system comprises at least one tube means connected to a reservoir means comprised in the floating platform means. Each tube means comprises a transporting means operable to transport water with a first temperature, T₁, from one end part of the tube means to the reservoir means. The power station means comprises a heat engine system comprising n number of energy cells, wherein n is an integer, and n ≥ 1. The heat engine system also comprises a heat source connected to the first energy cell, and a cooler means connected to the last energy cell. The heat source receives water with a second temperature, T₂, via a first feeding tube from the vicinity of the surface of the water, and the cooler means receives water with the first temperature, T₁, from the reservoir means via a second feeding tube, wherein T₂ > T₁. Each energy cell is operable to generate a pressurized fluid when a phase change material (PCM), comprised in each energy cell, changes from solid phase to liquid phase. The power station means also comprises a hydraulic system connected to the heat engine system, and being operable to generate a constant rotation speed.

A main advantage with this system is that it is possible to use a temperature difference between T₂ and T₁ which is very low with an acceptable efficiency and cost.

A further advantage in this context is achieved if the tube means are fixed to each other. Hereby is achieved a stable design that resist ocean waves.

Furthermore, it is an advantage in this context if the at least one transporting means is in the form of an electrical or hydraulic pump means located in the end part of the tube means.

According to another embodiment it is an advantage if the at least one transporting means is in the form of an electric or hydraulic propeller means located in the end part of the tube means.

According to yet another embodiment it is an advantage in this context if the at least one transporting means is in the form of a PCM-based water carrier that uses temperature differentials for autonomous propulsion in the tube means,

A further advantage in this context is achieved if the reservoir means is thermally insulated from the surrounding water. Hereby the efficiency is increased.

Furthermore, it is an advantage in this context if the level of the water in the reservoir means is lower than or equal to the level of the water outside the floating platform means. This means that the energy consumed for transporting the water only corresponds to the energy to compensate for the water flow losses inside the tube means.

A further advantage in this context is achieved if the hydraulic system comprises a pressure transducer, and a hydraulic motor with a variable displacement, and connected to the pressure transducer. Hereby it is possible to generate a constant rotational speed.

Furthermore, it is an advantage in this context if the power station means also comprises an electrical generator means connected to the hydraulic motor and operable to generate electricity with a specific frequency and amplitude, and a control system operable to control the process performance based on real time measurements of time, flow, temperature and pressure. Hereby it is possible to generate electricity with the same advantages as given above. Furthermore, it is also possible to optimize the process performance.

A further advantage in this context is achieved if the energy cells are operable between a first phase, and a second phase, wherein, during the first phase, every two energy cells produces pressurized fluid, and every two energy cells are cooling down, and vice versa during the second phase.

it will be noted that the term "comprises/comprising" as used in this description is intended to denote the presence of a given characteristic, step or component, without excluding the presence of one or more other characteristic, features, integers, steps, components or groups thereof.

Embodiments of the invention will now be described with reference to the accompanying drawings, in which:

### Brief description of the drawings

Fig. 1 is a schematic view of a maritime power plant system 10 according to the present invention;
Fig. 2 is a schematic view of a power station system or means 22 according to the present invention;
Fig. 3 is a schematic view of the floating platform means 20 with the reservoir means 26;
Fig. 4 is a schematic view of the water carrier 28 in a first state;
Fig. 5 is a schematic view of the water carrier 28 in a second state;
Fig. 6 discloses schematically a configuration with two groups of energy cells 12 comprised in a power station system 22;
Fig. 7 discloses schematically a configuration with six groups of energy cells 12 connected in series and comprised in a power station system 22;
Fig. 8 is a block diagram of a first embodiment of a hydraulic system 38 according to the present invention;
Fig. 9 is a block diagram of a second embodiment of a hydraulic system 38 according to the present invention;
Fig. 10 is a block diagram of a first embodiment of a pressure transducer 40 according to the present invention; and
Fig. 11 is a block diagram of a second embodiment of a pressure transducer 40 according to the present invention.

### Detailed description of the preferred embodiments

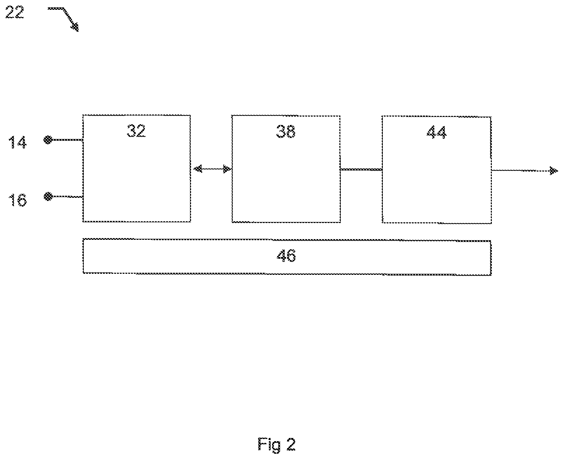

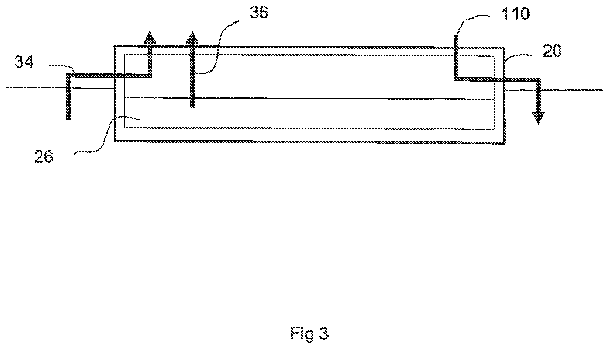

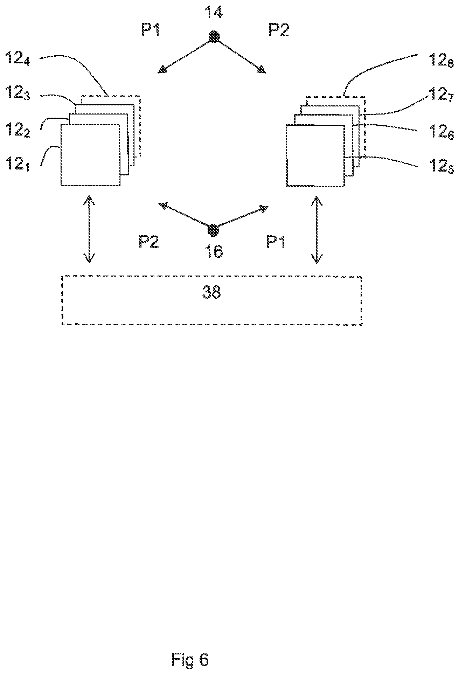

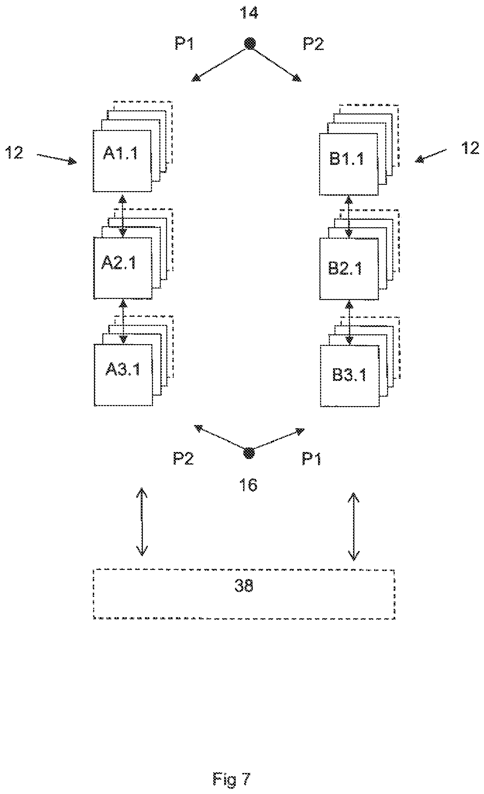

In fig. 1 there is disclosed a schematic view of a maritime power plant system 10 according to the present invention. The maritime power plant system 10 is operable to generate energy, and comprises mainly a water supply system 18, a floating platform means 20, and a power station means or system 22. In the general case, the water supply system 18 comprises m number of tube means 24₁, ..., 24ₘ, wherein m is an integer, and m ≥ 1. In fig. 1, there is only disclosed two tube means 24₁ and 24₂, for the sake of simplicity. Furthermore, a third tube means is also indicated with a broken line. The two tube means 24₁ and 24₂ are connected to a reservoir means 26 comprised in the floating platform means 20. As also is apparent in fig. 1, each tube means 24₁ and 24₂ comprises a transporting means 28₁ and 28₂ operable to transport water with a first temperature, T₁, from one end part 30₁ and 30₂ of the tube means 24₁ and 24₂ to the reservoir means 26. Expressed with other words, cold water from the ocean depths are transported to the reservoir means 26 with the aid of the transporting means 28₁ and 28₂. Furthermore, the power station means 22 comprises a heat engine system 32 (see fig. 2) comprising n number of energy cells 12₁, ..., 12ₙ (see fig. 6 and 7), wherein n is an integer, and n ≥ 2. The energy cells 12₁,..., 12ₙ can be connected in a sequence. The heat engine system 32 also comprises a heat source 14 connected to the first energy cell 12₁, and a cooler means 16 connected to the last energy cell 12ₙ. The heat source 14 receives water with a second temperature, T₂, via a first feeding tube 34 (see fig. 3) from the vicinity of the surface of the water. The temperature T₂ corresponds to the ocean surface temperature. The cooler means 16 receives water with the first temperature, T₁. from the reservoir means 26 via a second feeding tube 36 (see fig. 3). In order for the maritime power plant system 10 to work, the following relationship has to be fulfilled T₂ > T₁. In a most preferred embodiment, T₂ - T₁ ≥ 20°C. Each energy cell 12₁; ...; 12ₙ is operable to generate a pressurized fluid when a phase change material (PCM), comprised in each energy cell 12₁; ...; 12ₙ, changes from solid phase to liquid phase. Furthermore, the power station means 22 also comprises a hydraulic system 38 (see fig. 2) connected to the heat engine system 32, and being operable to generate a constant rotation speed.

According to a preferred embodiment of the maritime power plant system 10, the tube means 24₁, ..., 24ₘ are fixed to each other. This means that the design will be stable and be able to resist ocean waves.

According to one alternative the transporting means 28₁ can be in the form of an electric or hydraulic pump means 28₁ located in the end part 30₁ of the tube means 24₁.

According to another alternative, the transporting means 28₁ can be in the form of an electric or hydraulic propeller means 28₁ also located in the end part 30₁ of the tube means 24₁.

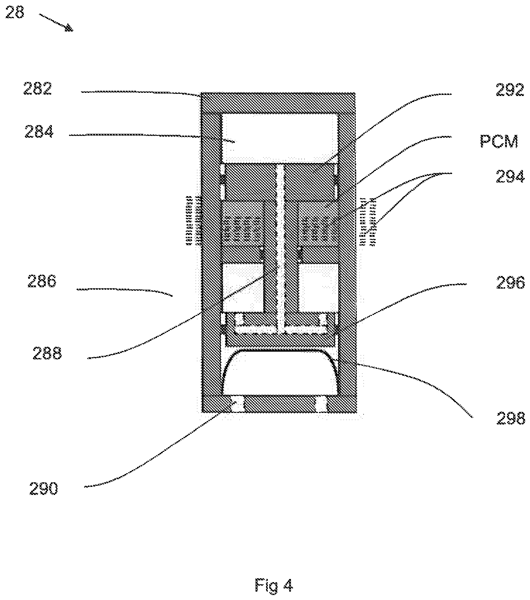

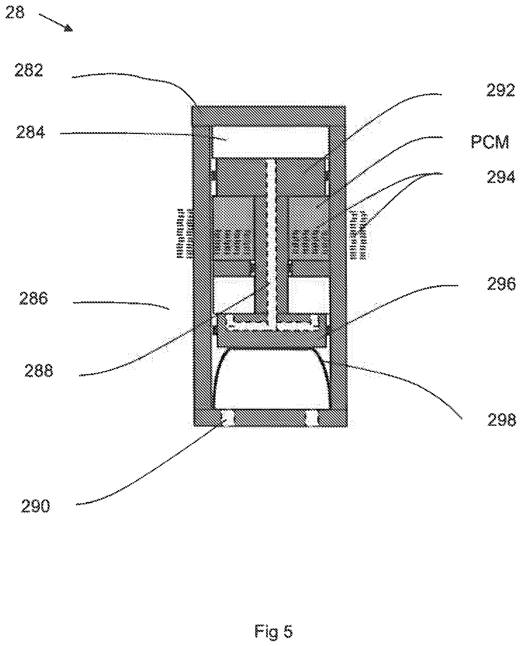

According to a third alternative, the transporting means 28₁ can be in the form of a PCM-based water carrier 28₁ that uses temperature differentials for autonomous propulsion in the tube means 24₁. For a more detailed description of the water carrier 28, see fig. 4 and 5 and the corresponding description.

It is pointed out that in the same maritime power plant system 10, a combination of two or three of the different examples of transporting means 28 can coexist.

In order to increase the efficiency of the maritime power plant system 10, the reservoir means 26 is thermally insulated from the surrounding water.

According to one preferred embodiment, the level of the water inside the reservoir means 26 shall be lower or equal to the level of the water outside the floating platform means 20. This relationship is disclosed in fig. 1, where the water level in the reservoir means 26 is lower than the water level in the ocean, i. e. outside the floating platform means 20.

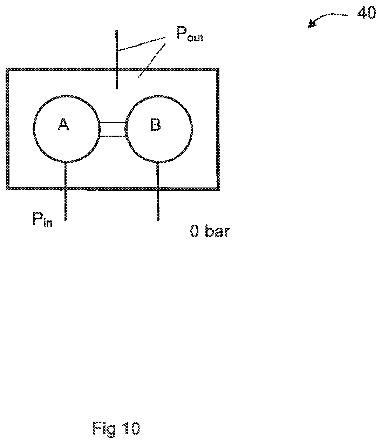

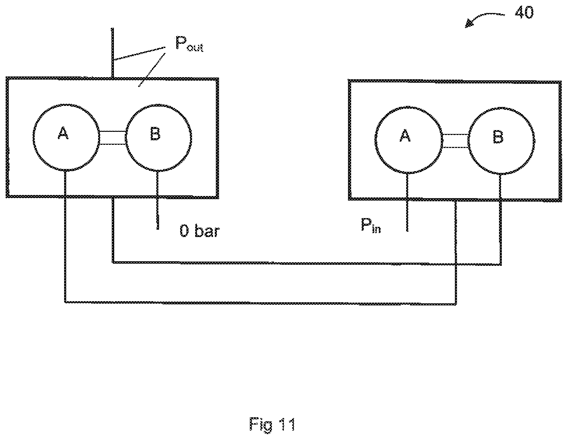

According to another embodiment of the maritime power plant system 10, the hydraulic system 38 comprises a pressure transducer 40 (see fig. 10 and 11), and a hydraulic motor 42 connected to the pressure transducer 40.

In fig. 2 there is disclosed a schematic view of the power station system or means 22 according to the present invention. The heat engine system 32 comprises or is connected to a heat source 14, and a cooler means 16. As also is apparent in fig. 2, the power station means 22 also comprises a hydraulic system 38 connected to the heat engine system 32, and operable to generate a constant rotation speed. Furthermore, the power station means 22 also comprises an electrical generator means 44 connected to the hydraulic system 38, and more exactly, to the hydraulic motor 42. The electrical generator means 44 is operable to generate electricity with a specific frequency and amplitude. As also is apparent in fig. 2, the power station means 22 also comprises a control system 46 operable to control the process performance based on real time measurements of time, flow, temperature and pressure.

According to a preferred embodiment of the maritime power plant system 10, the energy cells 12₁, ..., 12ₙ are operable between a first phase, and a second phase, wherein, during the first phase, every two energy cells produces pressurized fluid, and every two energy cells are cooling down, and vice versa during the second phase.

In fig. 3 there is disclosed a schematic view of the floating platform means 20 comprised in the maritime power plant system 10 according to the present invention. As is apparent in fig. 3 the floating platform means 20 comprises a reservoir means 26 intended to store water. Also disclosed in fig. 3 is a first feeding tube 34 for feeding warm water from the surface of the ocean to the heat source 14 (see fig. 2). Furthermore, there is also disclosed a second feeding tube 36 for feeding water from the reservoir means 26 to the cooler means 16 (see fig. 2). It is pointed out that the water in the reservoir means 26, which have been transported from the depth of the ocean, has a temperature lower than the temperature of the surface water. As also is apparent in fig. 3 there is also a water flushing tube 110 for flushing of waste water from the maritime power plant system 10.

In fig. 4 there is disclosed a schematic view of the PCM-based water carrier 28 in a first state, and in fig. 5 there is disclosed a schematic view of the water carrier 28 in a second state. As is apparent in both fig. 4 and 5, the water carrier 28 comprises a high pressure vessel 282, gas under high pressure 284, surrounding water 286, a gas channel 288, water inlet/outlet 290, a master piston 292, phase change material (PCM), flanges 294, a slave piston 296, and a flexible membrane 298. The master and slave pistons 292 and 296 are connected via a rod with a channel 288 for gas levelling.

The function of the water carrier 28 will now be described with reference to first fig. 4, and thereafter to fig. 5. The first state disclosed in fig. 4 is when it is floating. Cold water from the bottom cools the PCM, which freezes and contracts. The pistons 292 and 296 are forced down by the gas 284. When the slave piston 296 moves it presses the water out from the vessel 282, thus making the vessel 282 lighter. Consequently, the vessel 282 floats up to the water surface.

The second state disclosed in fig. 5 is when it is sinking. Warm water from the surface heats the PCM. which melts and expands. The master piston 292 is forced up by the PCM. The slave piston 296 is forced up by the connecting rod. The gas 284 is compressed and acts like a spring. When the slave piston 296 moves it leaves space for surrounding water to fill the membrane 298 thus making the vessel 282 heavier, because water has a higher density than PCM. The vessel 282 sinks down to the bottom. Since the gas chambers 284 are connected the gas pressure acts on both pistons 292 and 296 making the spring force higher.

Furthermore, the floating platform means 20 can be built from concrete, steel, composites or other material suitable for long term offshore use. The floating platform means 20 could also host other machines, e. g. for the production of hydro oxygen. The floating platform means 20 shall allow for ships to dock and helicopters to land.

It is also pointed out that the transporting means 28 shall be flexible mounted to allow for service and repair at service level.

In fig. 6 there is schematically disclosed a configuration with two groups of energy cells 12 comprised in a power station system or means 22. As is schematically disclosed in fig. 6, the energy cells 12₁-12₄ are connected, and work in parallel, and the energy cells 12₅-12₈ are connected, and work in parallel. Also disclosed in fig. 6 is the heat source 14 connected to the energy cells, and the cooler means 16 connected to the energy cells. Furthermore, in fig. 6 there is also disclosed the hydraulic system 38 connected to the heat engine system 32 (not disclosed in fig. 6) comprising the energy cells 12₁-12₈. In the first part of the cycle (Phase 1; P1), the heat source 14 heats the energy cells 12₁-12₄, while the cooler means 16 cools the energy cells 12₅-12₈. In the second part of the cycle (Phase 2; P2), the heat source 14 heats the energy cells 12₅,-12₈, while the cooler means 16 cools the energy cells 12₁-12₄. The temperature difference between the heat source 14 and the cooler means 16 is adapted to the selected PCM characteristics. It should normally be at least 20°C to get an acceptable efficiency and power output.

In fig. 7 there is schematically disclosed a configuration with six groups of energy cells 12 comprised in a power station system 22. The groups A 1.1, A 2.1 and A 3.1 are connected in series and the groups B 1.1, B 2.1 and B 3.1 are also connected in series, in order to reuse heat and increase the efficiency. Also disclosed in fig. 7 is the heat source 14 connected to the energy cells 12, and the cooler means 16 also connected to the energy cells 12. Furthermore, in fig. 7 there is also disclosed the hydraulic system 38 (not disclosed in fig. 7) comprising all the energy cells 12. In the first part of the cycle (Phase 1; PI), the heat source 14 heats the energy cells 12 in the group A 1.1, implying that the PCM in these energy cells are melting. Surplus heat from the energy cells in the group A 2.1 is used to heat the energy cells in the group A 3.1. This means that the PCM in the energy cells 12 in A 2.1 is freezing and the PCM in the energy cells 12 in A 3.1 is melting. Surplus heat from the energy cells in the group B 1.1 is used to heat the energy cells in the group B 2.1. This means that the PCM in the energy cells in B 1.1 is freezing and the PCM in the energy cells in B 2.1 is melting. The cooler means 16 cools the PCM in the energy cells 12 in B 3.1.

In the second part of the cycle (Phase 2; P2), the heat source 14 heats the energy cells 12 in the group B 1.1, implying that the PCM in these energy cells are melting. Surplus heat from the energy cells in B 2.1 is used to heat the energy cells in B 3.1. This means that the PCM in the energy cells in B 2.1 is freezing and the PCM in the energy cells in B 3.1 is melting. Surplus heat from the energy cells in group A 1.1 is used to heat the energy cells in the group A 2.1, This means that the PCM in the energy cells 12 in A 1.1 is freezing and the PCM in the energy cells in A 2.1 is melting. The cooler means 16 cools the energy cells 12 in the group A 3.1, implying that the PCM in the energy cells 12 in A 3.1 is freezing.

According to a preferred embodiment of the power station system 22, the energy cells 12₁-12ₙ are connected in a sequence, and the heat source 14 is connected to the first energy cell 12₁, and the cooler means 16 is connected to the last energy cell 12ₙ. During the first phase, every two energy cells 12₁, 12₃, 12₅, ... produces pressurized fluid, and every two energy cells 12₂, 12₄, 12₆, .. are cooling down, and vice versa during the second phase.

The reuse could be done in one or more steps. Each step requires a temperature difference between the heat source 14 and the cooler means 16 of approximately 20°C. If for example we have a heat source 14 at 80°C and a cooler means 16 at 20°C we could reuse heat in two steps, i. e. 2 x 3 groups of energy cells 12 (as in fig. 7).

According to a further embodiment, the pressure transducer 40 is operable to reduce the pressure in the pressurized fluid from the energy cells 12₁-12ₙ.

Furthermore, the hydraulic motor 42 in the power station system 22 is operable to generate the constant rotation speed during variable torque.

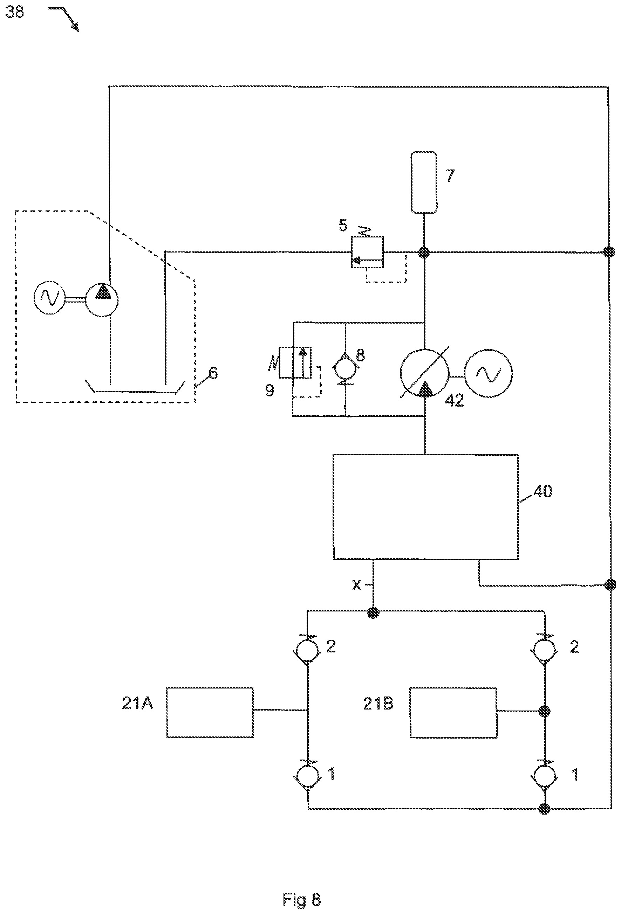

In fig. 8 there is disclosed a block diagram of a first embodiment of a hydraulic system 38 according to the present invention. The embodiment disclosed in fig. 8 comprises a hydraulic motor 42 for the working of an electric generator for generating electric energy. Furthermore, the hydraulic system 38 also comprises a first hydraulic pressure producer 21A and a second hydraulic pressure producer 21B, both in hydraulic connection with the hydraulic motor 42. It is pointed out that each of the hydraulic pressure producers 21A and 21B corresponds and is equal to the heat engine system 32 described earlier in this description. The first and second hydraulic pressure producers 21A, 21B are both operable to transfer hydraulic energy to the hydraulic motor 42. As is apparent in fig. 8, the first and second hydraulic pressure producers 21A, 21B are mutually hydraulically connected in parallel. The first and second hydraulic pressure producers 21A, 21B are arranged for working in cycles so that the first hydraulic pressure producer 21A delivers an outflow at the same time as the second hydraulic pressure producer 21B has an inflow, whereas the first hydraulic pressure producer 21A has an inflow at the same time as the second hydraulic pressure producer 21B delivers an outflow. The first and second hydraulic pressure producers 21A, 21B are arranged to work with a mutual phase difference of approximately 180 degrees. Furthermore, the hydraulic system 38 comprises a number of check valves 1, 2, and 8. The inflow to the hydraulic pressure producers 21A, 21B has a base pressure and passes the check valve 1. The outflow passes the check valve 2. The flow passing the point x in the block diagram is either emanating from the first hydraulic pressure producer 21A or from the second hydraulic pressure producer 21B. Furthermore, the hydraulic system 38 also comprises a pressure transducer 40 connected between the hydraulic pressure producers 21A and 21B, and the hydraulic motor 42. The pressure transducer 40 is operable to lower the hydraulic pressure from a higher pressure in a fluid to a lower pressure in the fluid. This will ensure a high reliability in operation and a long lifetime of the hydraulic motor 42.

In order to protect the hydraulic motor 42 against a too high pressure, the hydraulic system 38 also comprises a pressure reducing valve 9 which by-passes a flow besides the hydraulic motor 42 at a too high working pressure.

In order to protect the hydraulic motor 42 against cavitation there is a check valve 8 in the hydraulic system 38. The check valve 8 is operable to prevent that the pressure in front of the hydraulic motor 42 becomes lower than the base pressure. Cavitation can occur if the flow from the pressure transducer 40 temporarily is too low or if the displacement is too high in relation to the flow.

The hydraulic motor 42 can e. g. be an asynchronous machine with four poles or a synchronous machine with four poles, both of which gives a constant rotation speed at a constant power frequency. After the hydraulic motor 42, a smaller amount of the flow is passing to a base unit 6 via a pressure reducing valve 5 which is regulating the base pressure.

As also is apparent in fig. 8, the hydraulic system 38 also comprises a flow accumulator 7 operable to stabilize the base flow in the system 38. It can be motivated to have a flow accumulator 7 in the hydraulic system 38 if the inflow to and outflow from the hydraulic pressure producers 21A, 21B fluctuate a lot or if the back flow from the base unit is too low.

It is pointed out that it is possible to have more than one hydraulic motor 42 in the hydraulic system 38 (not disclosed in any figure). If several hydraulic motors 42 are connected together for the operation of the generator at least one of the hydraulic motors 42 shall have a variable displacement.

When the hydraulic pressure producer 21A has completed half of its cycle, i. e. when it has reached 180 degrees, there are still stored energy in the fluid. Now the pressure will decrease during the following process and when the pressure has decreased to p1 also the displacement of the hydraulic motor 42 starts to decrease. The hydraulic motor 42 will still have the same rotation speed but the torque delivered to the generator will decrease in relation to the decreasing of the displacement and the pressure. The energy delivered to the generator will decrease faster and faster. The largest part of the energy stored in the fluid will be transferred to the generator during this phase.

The outflow of fluid from the hydraulic pressure producers 21A, 21B is started with a certain delay due to the fact that the pressure has to be raised before a flow is possible. As long as the pressure from the hydraulic pressure producer 21A is higher than the pressure from the hydraulic pressure producer 21B, the check valve 1 will be closed. The flow of fluid at the point x in the block diagram disclosed in fig. 8 emanates in principle from the hydraulic pressure producer 21A from that point when the working cycle (360 degrees) of the hydraulic pressure producer 21A has passed a number of degrees until it has passed more than half of its cycle. During the rest of the time, the flow will of course emanate from the hydraulic pressure producer 21B. If it is supposed that the hydraulic pressure producer 21A is started at the phase zero, and if the delay corresponds to 40 degrees of the cycle, will the flow at the point x emanate from the hydraulic pressure producer 21A during 40-220 degrees, from the hydraulic pressure producer 21B during 220-400 degrees, and from the hydraulic pressure producer 21A during 400-580 degrees.

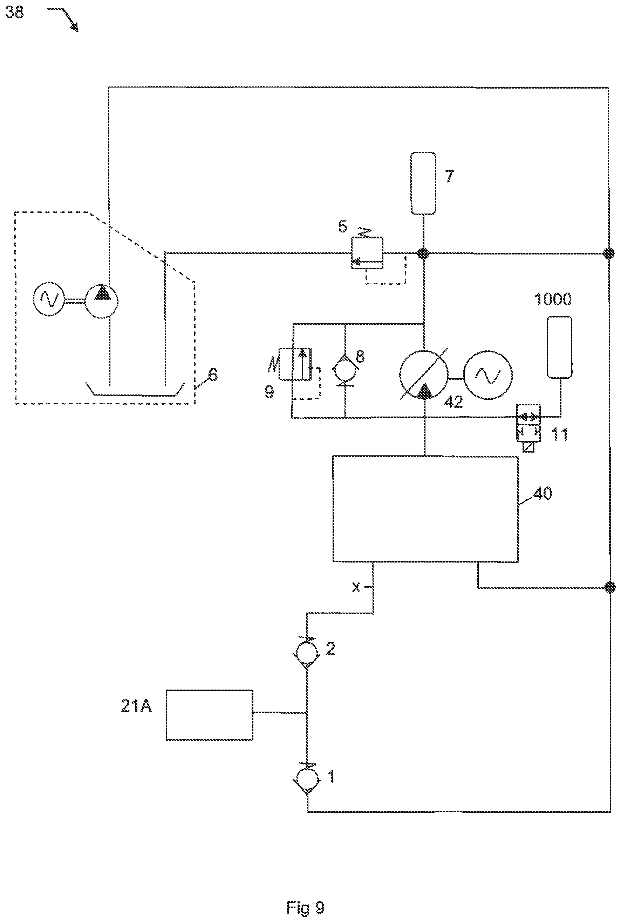

In fig. 9 there is disclosed a block diagram of a second embodiment of a hydraulic system 38 according to the present invention. In this embodiment there is only one hydraulic pressure producer 21A, and consequently only one check valve each of 1 and 2, as is apparent in fig. 9. Another difference between the embodiments disclosed in fig. 8 and 9 is that in this second embodiment there is also a flow accumulator 1000 and a valve 11. The other similar elements occurring in both the embodiments have been provided with the same reference signs and will not be described in detail again.

As is apparent in fig. 9 the outflow from the pressure transducer 40 is connected to the flow accumulator 1000 via the valve 11, and to the hydraulic motor 42 which in turn is operating an electric generator.

The flow accumulator 1000 has a relatively high charging pressure and the pressure is assumed to increase to the maximum operating pressure when it has achieved the maximum charging. The flow accumulator 100 is operable to accumulate fluid when a flow from the hydraulic pressure producer 21A is larger than an intended flow to the hydraulic motor 42, and to deliver fluid when the flow from the hydraulic pressure producer 21A is smaller than the intended flow to the hydraulic motor 42. The valve 11 is either open or closed, which is controlled either hydraulically or electrically. The combination of the flow accumulator 1000 and the valve 11 gives an opportunity to use the compressed energy in the hydraulic system 38.

It is pointed out that there are mainly three different pressure levels in the hydraulic system 38: a base pressure p1 which is prevailing downstream in relation to the hydraulic motor 42 and to the check valve 1, and also between the check valves 1, 2 when there is an inflow to the hydraulic pressure producer 21A; a fluctuating high pressure p2 which is prevailing between the check valves 1, 2 at outflow and between the check valve 2 and the pressure transducer 40; a fluctuating operating pressure between the pressure transducer 40 and the hydraulic motor 42.

According to an embodiment of the hydraulic system 38, at least one of the hydraulic pressure producers 21A, 21B is a pump. Furthermore, the pump can be linear with pressure strokes for fluid delivery and return strokes for fluid intake.

In fig. 10 there is disclosed a block diagram of a first embodiment of a pressure transducer 40 according to the present invention. The pressure transducer 40 is operable to transform a pressure of a fluid from one pressure level Pᵢₙ to another pressure level Pₒᵤₜ. This embodiment disclosed in fig. 10 comprises a pair of hydraulic rotating machines A, B that are mutually mechanically interconnected in such a way that the first machine A can run the second machine B. The machines A, B are mounted in a substantially closed room, and each of the machines A, B is in hydraulic connection with the closed room. As also is apparent in fig. 10, each of the machines A, B is provided with a hydraulic inlet (Pᵢₙ) and a hydraulic outlet (Pₒᵤₜ). It is pointed out that the embodiment disclosed in fig. 10 is used for decreasing the pressure of the fluid. This means that each one of the machines A, B is in hydraulic connection with the closed room via the hydraulic outlet (Pₒᵤₜ). If on the other hand the pressure transducer 40 should be used for increasing the pressure of the fluid, (not disclosed in the figures) each one of the machines A, B is in hydraulic connection with the closed room via the hydraulic inlet. In the embodiment disclosed in fig. 10, the closed room is in hydraulic connection with a fluid source of the pressure level Pₒᵤₜ, the hydraulic rotating machine A is in hydraulic connection with a fluid source of the pressure level Pᵢₙ, and the hydraulic rotating machine B is in hydraulic connection with a fluid source of the pressure level 0 bar. If the machines A, B are of the same size, and the maximum normal pressure is 200 bar, the embodiment disclosed in fig. 10 will give the figures 400 bar for Pᵢₙ and 200 bar for Pₒᵤₜ.

According to an embodiment of the pressure transducer 40, the mutually mechanically interconnected machines A, B are interconnected via at least one shaft coupling.

In fig. 11 there is disclosed a block diagram of a second embodiment of a pressure transducer 40 according the present invention. In this embodiment of the pressure transducer 40 there are two closed rooms, each comprising two hydraulic rotating machines A, B. The hydraulic rotating machines A, B are mutually mechanically interconnected in such a way that for each pair of machines A, B and for each closed room, the first machine A can run the second machine B. As is apparent in fig. 11, the pressure transducer 40 is provided with a hydraulic inlet (Pᵢₙ) and a hydraulic outlet (Pₒᵤₜ). Furthermore, the machine A in the left pair of machines is hydraulically connected to the second, right room, whereas the machine B in the right pair of machines is hydraulically connected to the first, left room. It is pointed out that the embodiment disclosed in fig. 11 is used for decreasing the pressure of the fluid. Using the same pressure levels as in fig. 10, in the case disclosed in fig. 11, i. e, if two pressure transducers 40 according to fig. 10 are connected in accordance with fig. 11, will give the figures 600 bar for Pᵢₙ and 200 bar for Pₒᵤₜ.

The same applies for the case where three pressure transducers 40 according to fig. 10 are connected in series (not disclosed), i. e. it will give the figures 800 bar for Pᵢₙ and 200 bar for Pₒᵤₜ.

The invention is not limited to the described embodiments. It will be evident for those skilled in the art that many different embodiments are feasible within the scope of the following Claims.

## Claims

1. A power station system (22) operable to generate energy, said power station system (22) comprises a heat engine system (32) and a hydraulic system (38) connected to said heat engine system (32), wherein said heat engine system (32) comprises n number of energy cells (12₁, ..., 12ₙ), wherein n is an integer, and n ≥ 1, a heat source (14) connected to said energy cells (12₁, ..., 12ₙ), and a cooler means (16) connected to said energy cells (12₁, ..., 12ₙ), wherein each energy cell (12₁; ...; 12ₙ) is operable to generate a pressurized fluid when a phase change material (PCM), comprised in each energy cell (12₁; ...; 12ₙ), changes from solid phase to liquid phase, and in that said energy cells (12₁, ..., 12ₙ) are operable between a first phase, and a second phase, wherein, during said first phase, n/2 of said energy cells produces pressurized fluid, and the rest of said energy cells are cooling down, and vice versa during said second phase, and **characterized in that** said hydraulic system (38) comprises a pressure transducer (40), and a hydraulic motor (42) connected to said pressure transducer (40), and operable to generate a constant rotation speed.

2. A power station system according to claim 1, **characterized in that** said power station system (22) also comprises an electrical generator means (44) connected to said hydraulic motor (42) and operable to generate electricity with a specific frequency and amplitude, and a control system (46) operable to control the process performance based on real time measurements of time, flow, temperature, pressure and power.

3. A power station system according to claim 1 or 2, **characterized in that** said energy cells (12₁, ..., 12ₙ) are connected in a sequence, and **in that** said heat source (14) is connected to said first energy cell (12₁), and said cooler means (16) is connected to said last energy cell (12ₙ), and **in that**, during said first phase, every two energy cells (12₁, 12₃, 12₅, ...) produces pressurized fluid, and every two energy cells (12₂, 12₄, 12₆, ...) are cooling down, and vice versa during said second phase.

4. A power station system according to claim 1 or 2, **characterized in that** n is an even integer, and **in that** said first n/2 number of energy cells (12₁, ..., 12_{n/2}) are connected, and work in parallel, and **in that** said second n/2 number of energy cells (12_{n/2 +1}, ..., 12ₙ) are connected, and work in parallel.

5. A power station system according to any one of claims 1-4, **characterized in that** said pressure transducer (40) is operable to reduce the pressure in said pressurized fluid from said energy cells (12₁, ..., 12ₙ).

6. A power station system according to any one of claims 1-5, **characterized in that** said hydraulic motor (42) is operable to generate said constant rotation speed during variable torque, and variable displacement.

7. A power station system according to any one of claims 2-6, **characterized in that** said control system (46) also is operable to monitor operational conditions, safety, and service intervals of said power station system (22).

8. A power station system according to any one of claims 1-7, **characterized in that** the temperature difference, T_{d}, between said heat source (14) and said cooler means (16) is at least 20 °C.

## Patentansprüche

1. Kraftwerksystem (22), das betreibbar ist, um Energie zu erzeugen, wobei das Kraftwerksystem (22) ein Wärmemotorsystem (32) und ein hydraulisches System (38), das mit dem Wärmemotorsystem (32) verbunden ist, aufweist, wobei das Wärmemotorsystem (32) n Anzahl von Energiezellen (12₁, ..., 12ₙ) aufweist, wobei n eine ganze Zahl und n ≥ 1 ist, wobei eine Wärmequelle (14) mit den Energiezellen (12₁, ..., 12ₙ) verbunden ist und ein Kühlermittel (16) mit den Energiezellen (12₁, ..., 12ₙ) verbunden ist, wobei jede Energiezelle (12₁, ..., 12ₙ) betreibbar ist, um ein Druckfluid zu erzeugen, wenn ein Phasenänderungsmaterial (PCM), das in jeder Energiezelle (12₁, ..., 12ₙ) enthalten ist, von einer festen Phase zu einer flüssigen Phase übergeht, und dass die Energiezellen (12₁, ..., 12ₙ) zwischen einer ersten Phase und einer zweiten Phase betreibbar sind, wobei während der ersten Phase n/2 der Energiezellen Druckfluid erzeugen und der Rest der Energiezellen abkühlen und während der zweiten Phase umgekehrt, und **dadurch gekennzeichnet, dass** das hydraulische System (38) einen Druckwandler (40) und einen hydraulischen Motor (42) aufweist, der mit dem Druckwandler (40) verbunden und betreibbar ist, um eine konstante Drehgeschwindigkeit zu erzeugen.

2. Kraftwerksystem nach Anspruch 1, **dadurch gekennzeichnet, dass** das Kraftwerksystem (22) auch ein elektrisches Generatormittel (44), das mit dem hydraulischen Motor (42) verbunden und betreibbar ist, um Elektrizität mit einer bestimmten Frequenz und Amplitude zu erzeugen, und ein Steuersystem (46), das betreibbar ist, um die Prozessleistung basierend auf Echtzeit-Messungen von Zeit, Strömung, Temperatur, Druck und Leistung zu steuern, aufweist.

3. Kraftwerksystem nach Anspruch 1 oder 2, **dadurch gekennzeichnet, dass** die Energiezellen (12₁, ..., 12ₙ) in einer Sequenz verbunden sind und dass die Wärmequelle (14) mit der ersten Energiezelle (12₁) verbunden ist und das Kühlermittel (16) mit der letzten Energiezelle (12ₙ) verbunden ist und dass während der ersten Phase jede zweite Energiezelle (12₁, 12₃, 12₅, ...) Druckfluid erzeugt und jede zweite Energiezelle (12₂, 12₄, 12₆, ...) abkühlt und während der zweiten Phase umgekehrt.

4. Kraftwerksystem nach Anspruch 1 oder 2, **dadurch gekennzeichnet, dass** n eine gerade ganze Zahl ist und dass die erste n/2 Anzahl von Energiezellen (12₁, ..., 12_{n/2}) verbunden sind und parallel arbeiten und dass die zweite n/2 Anzahl von Energiezellen (12_{n/2+1}, ..., 12ₙ) verbunden sind und parallel arbeiten.

5. Kraftwerksystem nach einem der Ansprüche 1-4, **dadurch gekennzeichnet, dass** der Druckwandler (40) betreibbar ist, um den Druck in dem Druckfluid von den Energiezellen (12₁, ..., 12ₙ) zu verringern.

6. Kraftwerksystem nach einem der Ansprüche 1-5, **dadurch gekennzeichnet, dass** der hydraulische Motor (42) betreibbar ist, um die konstante Drehgeschwindigkeit während eines variablen Drehmoments und einer variablen Verdrängung zu erzeugen.

7. Kraftwerksystem nach einem er Ansprüche 2-6, **dadurch gekennzeichnet, dass** das Steuersystem (46) auch betreibbar ist, um Betriebsbedingungen, Sicherheit und Wartungsintervalle des Kraftwerksystems (22) zu überwachen.

8. Kraftwerksystem nach einem der Ansprüche 1-7, **dadurch gekennzeichnet, dass** der Temperaturunterschied, T_{d}, zwischen der Wärmequelle (14) und dem Kühlermittel (16) mindestens 20°C beträgt.

## Revendications

1. Système de centrale électrique (22) destiné à produire de l'énergie, ledit système de centrale électrique (22) comprend un système de moteur thermique (32) et un système hydraulique (38) raccordé au dit système de moteur thermique (32), dans lequel ledit système de moteur thermique (32) comprend un nombre n de cellules énergétiques (12₁, ..., 12ₙ), dans lequel n est un nombre entier et n ≥ 1, une source de chaleur (14) raccordée auxdites cellules énergétiques (12₁, ..., 12ₙ), et un moyen de refroidissement (16) raccordé auxdites cellules énergétiques (12₁, ..., 12ₙ) dans lequel chaque cellule énergétique (12₁, ..., 12ₙ) est destinée à générer un fluide sous pression lorsqu'un matériau à changement de phase (PCM) inclus dans chaque cellule énergétique (12₁, ..., 12ₙ) passe d'une phase solide à une phase liquide et en ce que lesdites cellules énergétiques (12₁, ..., 12ₙ) utilisables entre une première phase et une seconde phase, dans lequel, pendant ladite première phase, n/2 desdites cellules énergétiques produisent un fluide sous pression et le reste desdites cellules énergétiques se refroidit et vice versa pendant ladite seconde phase et **caractérisé en ce que** ledit système hydraulique (38) comprend un transducteur de pression (40) et un moteur hydraulique (42) raccordé au dit transducteur de pression (40) et destiné à produire une vitesse de rotation constante.

2. Système de centrale électrique selon la revendication 1, **caractérisé en ce que** ledit système de centrale électrique (22) comprend également un moyen de générateur électrique (44) raccordé au dit moteur hydraulique (42) et destiné pour produire de l'électricité avec une fréquence et une amplitude spécifiques, et un système de commande (46) destiné à réguler les performances du processus en se basant sur des mesures en temps réel du temps, du flux, de la température, de la pression et de l'énergie.

3. Système de centrale électrique selon la revendication 1 ou 2, **caractérisé en ce que** lesdites cellules énergétiques (12₁, ..., 12ₙ) sont raccordées dans une séquence, et **en ce que** ladite source de chaleur (14) est raccordée à ladite première cellule énergétique (12₁) et ledit moyen de refroidissement (16) est raccordé à ladite dernière cellule énergétique (12ₙ) et **en ce que**, pendant ladite première phase, une cellule énergétique sur deux (12₁, 12₃, 12₅, ...) produit un fluide sous pression et une cellule énergétique sur deux (12₂, 12₄, 12₆, ...) se refroidit et vice versa pendant ladite seconde phase.

4. Système de centrale électrique selon la revendication 1 ou 2, **caractérisé en ce que** n est un nombre entier pair et **en ce que** ledit premier nombre n/2 de cellules énergétiques (12₁, ..., 12_{n/2}) est raccordé et travaille en parallèle, et **en ce que** ledit second nombre n/2 de cellules énergétiques (12_{n/2+1}, ..., 12ₙ) est raccordé et travaille en parallèle.

5. Système de centrale électrique selon l'une quelconque des revendications 1 à 4, **caractérisé en ce que** ledit transducteur de pression (40) est destiné à réduire la pression dans ledit fluide sous pression provenant desdites cellules énergétiques (12₁, ..., 12ₙ) .

6. Système de centrale électrique selon l'une quelconque des revendications 1 à 5, **caractérisé en ce que** ledit moteur hydraulique (42) est destiné à générer ladite vitesse de rotation constante pendant un couple variable et un déplacement variable.

7. Système de centrale électrique selon l'une quelconque des revendications 2 à 6, **caractérisé en ce que** ledit système de commande (46) est également destiné à surveiller des conditions opérationnelles, la sécurité et des intervalles de service dudit système de centrale électrique (22).

8. Système de centrale électrique selon l'une quelconque des revendications 1 à 7, **caractérisé en ce que** la différence de température, T_{d}, entre ladite source de chaleur (14) et ledit moyen de refroidissement (16) est d'au moins 20 °C.
